# EUROPEAN PATENT APPLICATION

(11) **EP 1 865 364 A1**
(43) Date of publication of application: **12.12.2007**
(21) Application number: 06730211.7
(22) Date of filing: 28.03.2006
(51) Int. Cl.: G02F 1/13, G02F 1/133, G02F 1/1347, G06F 3/048, G06F 3/14, G09G 3/20, G09G 3/36

(54) **MOBILE INFORMATION TERMINAL DEVICE, AND DISPLAY TERMINAL DEVICE**

(30) Priority: 01.04.2005 JP 2005105980
(71) Applicant: Sharp Kabushiki Kaisha, Osaka-shi, Osaka 545-8522 (JP)
(72) Inventor: SAKAGUCHI, Akio, Hiroshima 739-0024 (JP); TANIGUCHI, Yasuyuki, Rapport-Kamo 307, Hiroshima 739-0146 (JP); INOUE, Keiji, Rapport-Kamo 244, 2-13-1, Iida, Hiroshima 739-0146 (JP)
(74) Representative: Müller, Frithjof E.
(86) International application number: PCT/JP2006/306263
(87) International publication number: WO 2006/106662

(57) **Abstract**

[Summary]

[Object] It is an object of the present invention to provide a portable information terminal device and a display device capable of effectively suppressing a display screen from being peeped from an oblique direction.

[Means for Settlement] A first pattern area and a second pattern area are formed in a display area of a display device 5; in a wide viewing field mode, the whole of the display area is brought into a wide viewing angle state; and in a narrow viewing field mode, a first divided state in which the display area except the first pattern area is brought into a narrow viewing angle state, and a second divided state in which the display area except the second pattern area is brought into the narrow viewing angle state are dynamically switched. For this reason, if the display area in the narrow viewing field mode is peeped from the oblique direction, a high contrast moving pattern arising from the difference in viewing angle is viewed, and thereby the conscious of the peeper can be attracted to the pattern. Accordingly, even if a screen display is visible with a low contrast, it can be prevented from being easily made out.

## Description

### TECHNICAL FIELD

The present invention relates to a portable information terminal device and a display terminal device, and more particularly to a display terminal device capable of variably controlling a view angle of a display device on which various types of information are displayed, and thereby suppressing a peep of a display screen, and to a portable information terminal device having such a display device, such as a mobile telephone.

### BACKGROUND ART

A small portable information terminal device can be carried while being held in a pocket or bag, and is used in various places. It is often used, for example, in a meeting room, restaurant, train, or bus, on a station platform, or in other place. In such a case, there exists a problem that other people around may peep at a display screen of the portable information terminal device, and therefore user's privacy may not be secured.

As measures for such peep, it can be considered that a viewing angle of a display device is narrowed. For example, there has been known a narrow viewing field film that can be attached to a display screen of a mobile telephone. The narrow viewing field film is a film that is transparent as viewed from the front, but opaque (e.g., black) as viewed from an oblique direction, and has some effect of preventing the peep. However, if this type of narrow viewing field film is attached, image quality is deteriorated even as viewed from the front, and therefore a user has to always view such a low quality screen display. Also, as in the case where a display screen is viewed by multiple people, usages such as viewing the display screen from an oblique direction becomes impossible.

Also, a technology for variably controlling the viewing angle of the display device has been proposed (e.g., Patent documents 1 and 2). Patent documents 1 describe configurations in which a liquid crystal panel is used to control a viewing angle in a display device of a mobile telephone, and Patent documents 2 describe configurations in which a liquid crystal panel is used to control a viewing angle in a display device of a car navigation system, respectively. In particular, in the car navigation system of Patent document 2, a configuration in which the viewing angle of a part of a display area is narrowed to thereby hide the partial area from a driver's side is described.
Patent document 1: Japanese Unexamined Patent Publication No. 2004-62094
Patent document 2: Japanese Unexamined Patent Publication No. 2003-15535

### DISCLOSURE OF THE INVENTION

### PROBLEM TO BE SOLVED BY THE INVENTION

In a conventional display device, by narrowing the viewing angle of the display screen, the screen display is made difficult to view from an oblique direction. However, even in such a display device, it is impossible to completely hide the screen display from the oblique direction, and the screen display just becomes difficult to view due to a reduction in contrast even as viewed from outside of the viewing angle. Accordingly, there exists a problem that other people can peep at the display screen if carefully viewing it even from the oblique direction.

The present invention is made in consideration of the above circumstances, and therefore has an object to provide a display terminal device capable of effectively suppressing a peep of the display screen from the oblique direction. Also, it is another object of the present invention to provide a portable information terminal device capable of effectively suppressing a peep of the display screen from the oblique direction.

The portable information terminal device and display terminal device according to the present invention are capable of switching a display device between a wide viewing field mode and a narrow viewing field mode, and in the narrow viewing field mode, by combining areas having a narrow viewing angle area and a wide viewing angle area in a display area to attract the conscious of a person attempting to peep from the oblique direction at to a pattern arising from the difference in viewing angle in the display area, prevent the peep.

A portable information terminal device of a first aspect of the present invention is configured to include a display device capable of switching between a wide viewing field mode in which a display area is made to be browsed in a wide viewing angle state and a narrow viewing field mode in which the display area is made to be browsed in a narrow viewing angle state, wherein a pattern area is formed in the display area of the display device; in the wide viewing field mode, the whole of the display area is brought into the wide viewing angle state; and in the narrow viewing field mode, the display area except the pattern area is brought into the narrow viewing angle state.

Such a configuration allow a high contrast pattern to be visible based on the difference in viewing angle between the pattern and background areas if a display screen is viewed from an oblique direction in the narrow viewing field mode. That is, the higher contrast pattern overlapped on a reduced contrast screen display is visible. Accordingly, in the narrow viewing field mode, the conscious of a person attempting to peep at the display screen can be attracted to the high contrast pattern to thereby prevent the low contrast screen display from being easily made out.

A portable information terminal device of a second aspect of the present invention is configured such that in addition to the above configuration, a first pattern area and a second pattern area are formed in the display area; in the wide viewing field mode, the whole of the display area is brought into the wide viewing angle state; and in the narrow viewing field mode, a first divided state in which the display area except the first pattern area is brought into the narrow viewing angle state, and a second divided state in which the display area except the second pattern area is brought into the narrow viewing angle state are dynamically switched.

Such a configuration allows the high contrast pattern visible from the oblique direction in the narrow viewing field mode to be dynamically varied. For this reason, the conscious of the person attempting to peep at the display screen can be attracted to the moving pattern to thereby prevent the screen display from being easily made out. Also, by varying the pattern areas, the screen display in the pattern areas can be prevented from being easily made out.

A portable information terminal device of a third aspect of the present invention is one including: a display device for displaying information in a display area on a display screen; and a viewing field switching device for switching a viewing angle of the display screen. The viewing field switching device includes: a viewing field switching panel that is arranged on the display screen and formed with a display transmitting face having a predetermined pattern area in the display area; viewing angle controlling means of controlling a viewing angle of a background area that is the display area except the pattern area; and mode switching means of switching between a wide viewing field mode in which the display area is made to be browsed in a wide viewing angle state and a narrow viewing field mode in which the display area is made to be browsed in a narrow viewing angle state. Also, the viewing field switching device makes a viewing angle of the pattern area and that of the background area coincide with each other in the wide viewing field mode, and differentiates the viewing angles of the pattern area and the background area from each other in the narrow viewing field mode.

A portable information terminal device of a fourth aspect of the present invention is configured such that in addition to the above configuration, the viewing angle controlling means can independently control the viewing angles of the pattern area and the background area.

A portable information terminal device of a fifth aspect of the present invention is configured such that in addition to the above configuration, the viewing field switching panel includes: two insulating transparent substrates arranged so as to face to each other; a liquid crystal encapsulated between these insulating transparent substrates; and two sheets of transparent electrodes respectively formed on inner faces of the insulating transparent substrates, at least one of the transparent electrodes is divided into an electrode piece formed in the pattern area and that formed in the background area, and the viewing angle controlling means makes potentials of the electrode pieces coincide with each other in the wide viewing field mode, and differentiates the potentials of the electrode pieces from each other in the narrow viewing field mode. Such a configuration allows the viewing angles of the pattern and background areas to be independently controlled within the display transmitting face of the viewing field switching panel configured by encapsulating the liquid crystal between the electrodes.

A portable information terminal device of sixth aspect of the present invention is configured such that in addition to the above configuration, the display area is in a rectangular shape, and the pattern area is in a shape extending in an oblique direction with respect to the display area. Because of such a configuration, a series of characters arranged in a horizontal or vertical direction, a graphic extending in the horizontal or vertical direction, and the like can be prevented from being easily made out through the pattern area.

A portable information terminal device of a seventh aspect of the present invention is configured to include: a display device for displaying information in a display area on a display screen; and a viewing field switching device for switching a viewing angle of the display screen, wherein the viewing field switching device includes: a viewing field switching panel that is arranged on the display screen and formed with a display transmitting face having a first pattern area and a second pattern area in the display area; viewing angle controlling means of controlling viewing angles of the first pattern area, the second pattern area, and a background area that is the display area except these pattern areas; and mode switching means of switching between a wide viewing field mode in which the display area is made to be browsed in a wide viewing angle state and a narrow viewing field mode in which the display area is made to be browsed in a narrow viewing angle state, makes the viewing angles of the first pattern area, the second pattern area, and the background area coincide with one another in the wide viewing field mode, and in the narrow viewing field mode, dynamically switches between a first divided state in which the viewing angle of the first pattern area is differentiated from those of the remaining areas and a second divided state in which the viewing angle of the second pattern area is differentiated from those of the remaining areas.

A portable information terminal device of an eighth aspect of the present invention is configured such that in addition to the above configuration, the viewing angle controlling means switches between the first divided state and the second divided state at predetermined time intervals.

A portable information terminal device of a ninth aspect of the present invention is configured such that in addition to the above configuration, the viewing field switching panel includes: two insulating transparent substrates arranged so as to face to each other; a liquid crystal encapsulated between these insulating transparent substrates; and two sheets of transparent electrodes respectively formed on inner faces of the insulating transparent substrates, the first pattern area, the second pattern area, and the background area are formed by dividing at least one of the transparent electrodes into two or more electrode pieces, and the viewing angle controlling means makes potentials of the electrode pieces coincide with each other in the wide viewing field mode, and differentiates the potentials of the electrode pieces from each other in the narrow viewing field mode. Such a configuration allows the viewing angles of the first pattern, second pattern, and background areas to be independently controlled within the display transmitting face of the viewing field switching panel configured by encapsulating the liquid crystal between the electrodes.

### EFFECT OF THE INVENTION

The portable information terminal device of the present invention is provided with the pattern areas having different viewing angles in the display area in the narrow viewing field mode in which the display area is made to be browsed in the narrow viewing angle state. For this reason, if the display area is viewed from the oblique direction in the narrow viewing field mode, the pattern arising from the difference in viewing angle appears, and thereby the conscious of the peeper can be attracted to the pattern. Accordingly, the screen display can be prevented from being easily made out or recognized from the oblique direction.

Also, in the narrow viewing field mode, by dynamically switching between the different pattern areas in the display area, a moving pattern appears if the display area is viewed from the oblique direction, and thereby the conscious of the peeper can be attracted to the pattern. Accordingly, the screen display can be further prevented from being easily made out or recognized from the oblique direction.

### BEST MODE FOR CARRYING OUT THE INVENTION

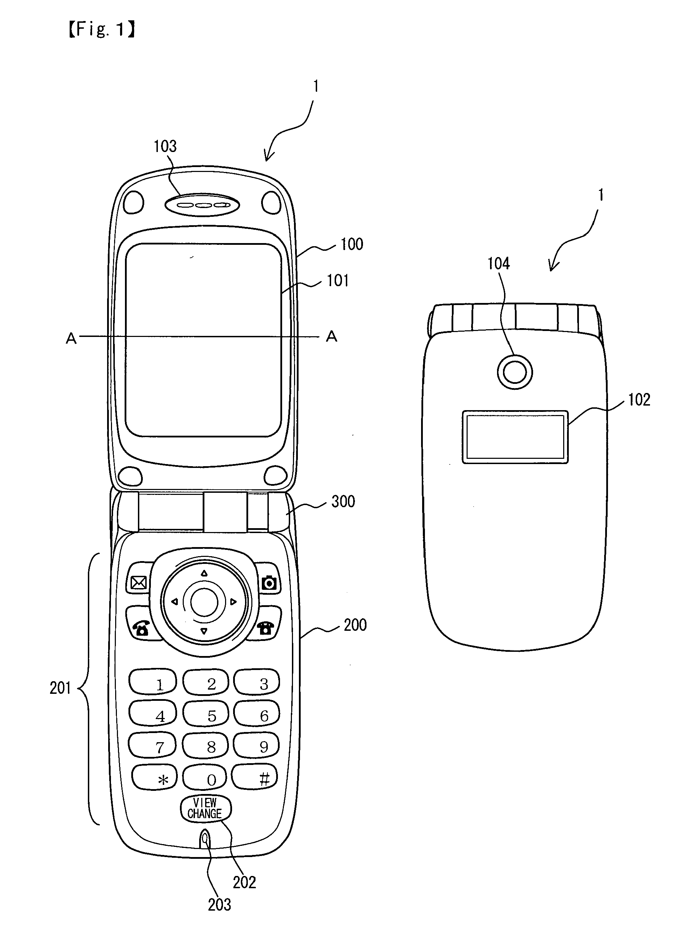

Fig. 1 is an external view illustrating an example of a portable information terminal device according to an embodiment of the present invention, in which a mobile telephone 1 is illustrated as the example of the portable information terminal device. The mobile telephone 1 is a so-called folding mobile telephone in which a display case 100 and an operation case 200 are connected to each other via a hinge part 300, and can be folded such that one face of the display case 100 and that of the operation case 200 face to each other.

The display case 100 has a main display part 101 and a telephone receiver 103 arranged on a face thereof that becomes an inner side when the mobile telephone 1 is folded, and a sub display part 102 and a camera 104 arranged on the other face thereof that becomes an outer side. Also, the operation case 200 has a plurality of operation keys 201 and a telephone microphone 203 arranged on a face thereof that becomes an inner side when the mobile telephone 1 is folded. Such a folding mobile telephone 1 can be carried in a compactly folded state, and if the both cases 100 and 200 are expanded, the operation keys 201 can be pressed down for operation while display on the main display part 101 is viewed. That is, main information is displayed with use of the main display part 101, and main input operations are performed using the operation keys 201.

The main display part 101 includes the display area typically having a portrait-oriented rectangular shape, on which various types of information including personal information are displayed. To prevent such display from being peeped by other people, the main display part 101 can variably control a viewing angle in a horizontal direction. In the present embodiment, the viewing field modes can be switched between a wide viewing field mode that is an operating state with a wider viewing angle and a narrow viewing field mode that is an operating state with a narrower viewing angle. The main display part 101 of the mobile telephone typically has the display area smaller than those of a TV receiver and stationary information terminal device, and is also appropriate for the viewing angle control because the mobile telephone is used in a user's hand and therefore a positional relationship between eyes of the user and the display screen is approximately constant. Further, the mobile telephone is used in a state where the main display part 101 is made vertical to some extent, so that by narrowing the viewing angle in the horizontal direction, the peep can be effectively prevented.

The operation keys 201 include a viewing field switching button 202 with which the user instructs to switch the viewing angle of the main display part 101. In the wide viewing field mode in which the main display part 101 is well visible from an oblique direction, if the user operates the viewing field switching button 202, the main display part 101 is brought into the narrow viewing field mode in which the main display part 101 is not easily visible from the oblique direction. Subsequently, if the user operates the viewing field switching button 202 again, the main display part 101 returns into the wide viewing field mode.

In the present embodiment, a case where the viewing angle control is performed on the main display part 101 is described as an example; however, it should be appreciated that a similar viewing angle control can also be applied to the sub display part 102. Further, in the present embodiment, a case where the viewing angle in the horizontal direction is controlled is described as an example; however, the viewing angle in a vertical direction can also be controlled in a similar manner.

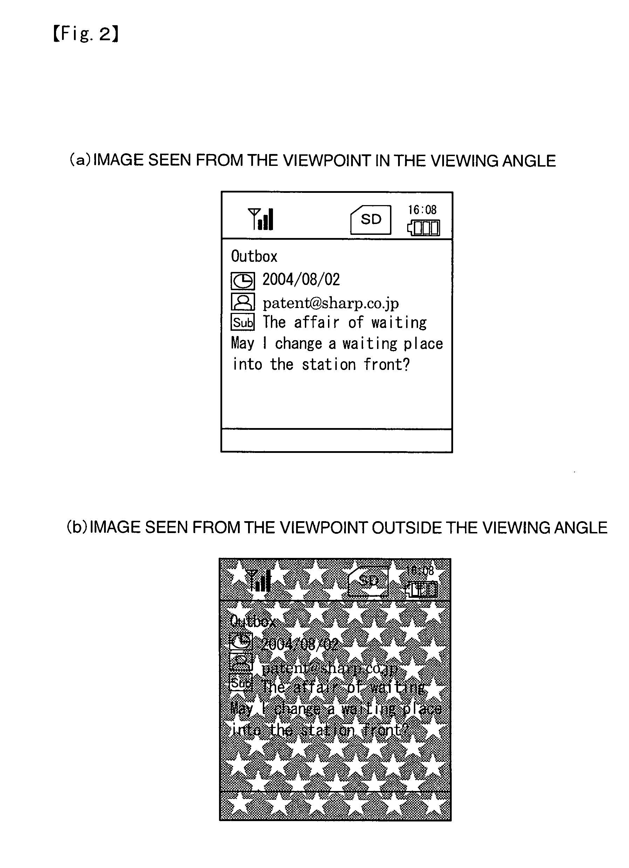

Fig. 2 is an explanatory diagram illustrating examples of how an image on the main display part 101 can be viewed in the narrow viewing field mode. Fig. 2 (a) illustrate an image for a case where the main display part 101 is viewed from a viewpoint within the viewing angle in the narrow viewing field mode, and Fig. 2 (b) illustrates an image for a case where it is viewed from a viewpoint outside the viewing angle in the narrow viewing field mode.

In the wide viewing field mode, if the main display part 101 is viewed from a viewpoint within the viewing angle in the wide viewing field mode, the screen display is of course well visible. Similarly, in the narrow viewing field mode, if the main display part 101 is viewed from the viewpoint within the viewing angle in the narrow viewing field mode, the screen display is also well visible as illustrated in Fig. 2 (a). In addition, in the narrow viewing field mode, color quality and the like are slightly reduced as compared with the wide viewing field mode; however, the screen display is still well visible in general.

On the other hand, if the main display part 101 in the narrow viewing field mode is viewed from a viewpoint that is within the viewing angle in the wide viewing field mode but outside the viewing angle in the narrow viewing field mode, the original screen display is visible only with a low contrast as illustrated in Fig. 2 (b), and instead, a pattern substantially consisting of a plurality of stars overlapped on the original screen display is visible with a high contrast. This pattern can be provided by partially differentiating the viewing angle in the display area of the main display part 101.

On the main display part 101 in the narrow viewing field mode, while the star pattern area is maintained in a wide viewing angle state, the remaining background area is only brought into a narrow viewing angle state. For this reason, if the main display part 101 is viewed from the oblique direction, the pattern area remains bright, and only the background area becomes dark, i.e., the high contrast pattern can be viewed as if it floats on the low contrast display area.

Human vision is characterized by being unconsciously attracted to the high contrast pattern, and not easily recognizing the low contrast pattern if such a screen display on which the two patterns having different contrasts are overlapped is viewed. The mobile telephone 1 in the present embodiment prevents content of the original screen display from being easily recognized or made out by attracting the conscious of a peeper in this manner even if the original screen display is visible with a low contrast.

In addition, if an inside of the pattern area is only focused on, the screen display is easily visible as compared with a case where the entire display area is brought into the narrow viewing field state. However, if a shape of the pattern area is devised by making a width or height thereof shorter, extending it in the oblique direction, or taking other measures, the content can be prevented from being easily recognized or made out in combination with the above attracting action of the vision.

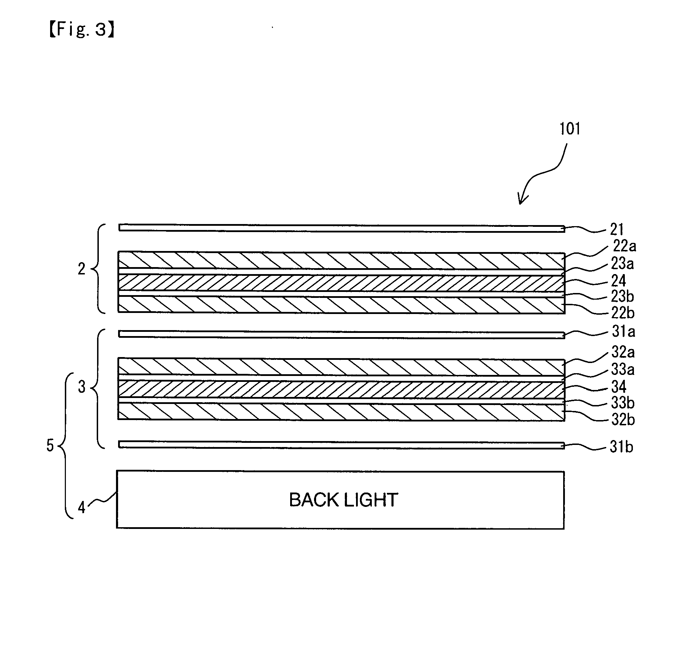

Fig. 3 is a cross-sectional view illustrating a configuration example of the main display part 101, in which a cross section along the line A-A in Fig. 1 is illustrated. The main display part 101 is a display device substantially including a viewing field switching panel 2 and a liquid crystal display module 5. On a display screen of the liquid crystal display module 5, a display transmitting face of the viewing field switching panel 2 is arranged, and if the viewing field switching panel 2 switches a viewing angle of the display transmitting face, the viewing angle of the main display part 101 can be switched.

The liquid crystal display module 5 is a well-known display device substantially including a liquid crystal panel for display 3 and a backlight 4. The liquid crystal panel for display 3 has a liquid crystal 34 encapsulated between two insulating transparent substrates (e.g., glass substrates) 32a and 32b. Also, deflection plates 31a and 31b are arranged on outer faces of the substrates 32a and 32b, respectively, and on inner faces of them, transparent electrodes (e.g., ITO electrodes) 33a and 33b are respectively formed. For example, in a case of a general TFT liquid crystal panel for display, a common electrode is formed as the electrode 33a on a front side, and a plurality of pixel electrodes are formed as the electrode 33b on a rear side.

The backlight 4 is a light source supplying light to the transmissive liquid crystal panel for display 3 from the rear side. The liquid crystal panel for display 3 controls whether or not incident light from the backlight 4 is transmitted on a pixel-by-pixel basis by controlling potential of each of the pixel electrodes, to display characters and images. That is, an area on the substrate 32b arranged thereon with the above pixel electrodes corresponds to the display area, and by differentiating a transmittance for the light depending on a position in the display area, information including characters, graphics, and the like is displayed.

On the other hand, the viewing field switching panel 2 provides variable control of the viewing angle by differentiating the light transmittance depending on a traveling direction of the light. In addition, an area through which the light from the liquid crystal display module 5 is transmitted, i.e., an area on the viewing field switching panel 2 corresponding to the display area of the liquid crystal display module 5 is referred to as the display transmitting face.

The viewing field switching panel 2 has a liquid crystal 24 encapsulated between two insulating transparent substrates 22a and 22b (e.g., glass substrates), and on an outer face of the substrate 22a on the front side, a deflection plate 21 is arranged, whereas on inner faces of the substrates 22a and 22b, transparent electrodes 23a and 23b (e.g., ITO electrodes) are respectively formed. That is, if the deflection plate 31a of the liquid crystal panel for display 3 is added, a configuration of the viewing field switching panel 2 becomes the same as that of the liquid crystal panel for display 3.

The deflection plates 21 and 31a are arranged such that transmission axes of them coincide with each other, and the incident light from the liquid crystal panel for display 3 can be transmitted through the viewing field switching panel 2 unless a deflection surface fluctuates in the liquid crystal 24. In the liquid crystal 24, because the deflection surface of transmitting light rotates depending on an angle formed by a light axis of the transmitting light with the front direction, the incident light obliquely traveling in the liquid crystal 24 toward outside of a predetermined viewing angle is blocked by the deflection plate 21.

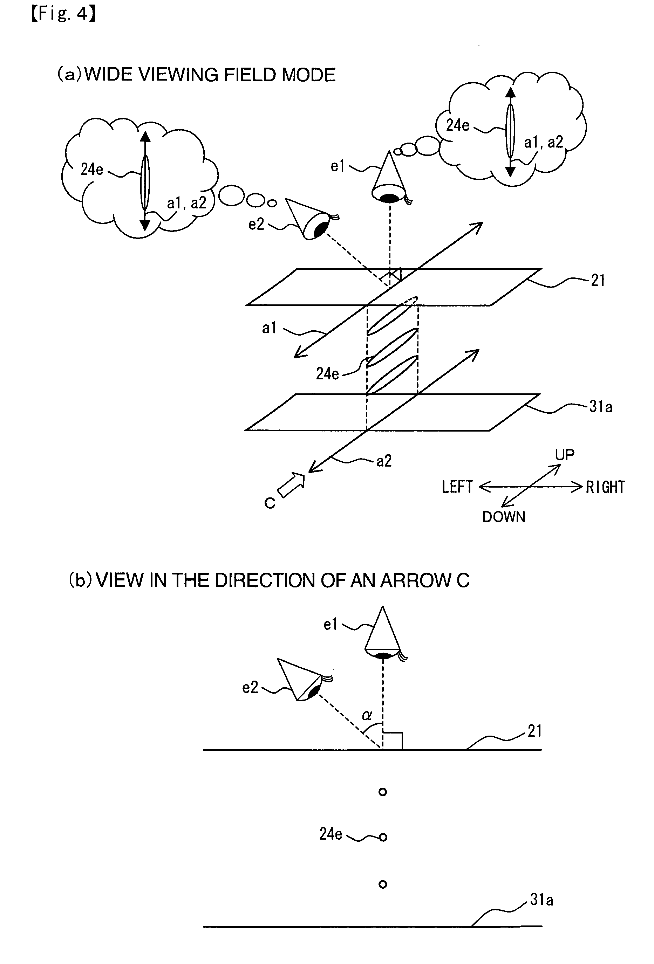

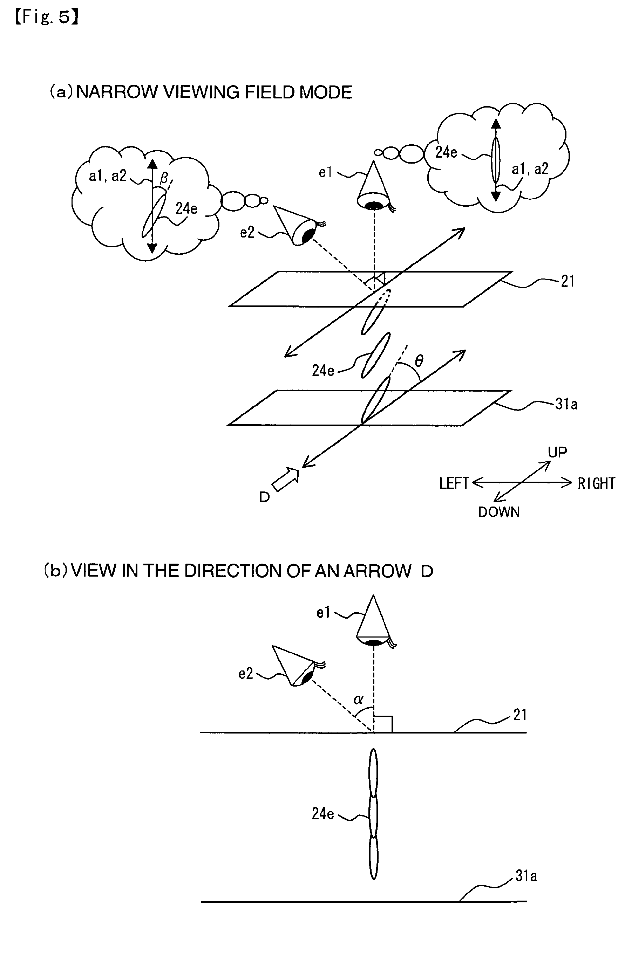

Figs. 4 and 5 are diagrams for describing a principle of the viewing angle control, and Fig. 4 is a schematic diagram illustrating an appearance in the wide viewing field mode, of which (a) is a perspective view, and (b) is a view in the direction of an arrow C. Also, Fig. 5 is a schematic diagram illustrating an appearance in the narrow viewing field mode, of which (a) is a perspective view, and (b) is a view in the direction of an arrow D.

The main display part 101 varies the viewing angle of the display screen in the horizontal direction by making both of the transmission axes a1 and a2 of the deflection plates 21 and 31a coincide with the vertical direction of the display screen to control orientation directions of liquid crystal molecules 24e (molecules of the liquid crystal 24) arranged between the deflection plates 21 and 31a.

In the wide viewing field mode, the liquid crystal molecules 24e are oriented so as to be parallel to the transmission axes a1 and a2 (see Fig. 4). At this time, even if the viewing field switching panel 2 is viewed from a viewpoint e1 on the front side, or alternatively even if it is viewed from a viewpoint e2 of which a direction forms a horizontal angle α with that of the viewpoint e1, the orientation directions of the liquid crystal molecules 24e seem to coincide with the transmission axes a1 and a2. Accordingly, regardless of a light traveling direction, the incident light from the liquid crystal panel for display 3 can be transmitted through the deflection plate 21 without being subjected to birefringence in the liquid crystal 24. The viewing angle of the main display part 101 is maximized in this case, and coincides with the viewing angle of the liquid crystal panel for display 3.

On the other hand, in the narrow viewing field mode, an electric field is formed between the electrodes 23a and 23b to thereby rotate the liquid crystal molecules 24e from a state illustrated in Fig. 4 and orient them so as to form an angle θ with the transmission axes a1 and a2 (see Fig. 5). However, the liquid crystal molecules 24e are only tilted in an anteroposterior direction by the above rotation, and a projection image on the display screen is still maintained parallel to the transmission axes a1 and a2. That is, the liquid crystal molecules 24e are rotated in a plane that is perpendicular to the display screen and parallel to the transmission axes a1 and s2.

If the viewing field switching panel 2 in such a narrow viewing field mode is viewed from the viewpoint e1 on the front side, the orientation directions of the liquid crystal molecules 24 seem to coincide with the transmission axes a1 and a2, similarly to the case of the wide viewing field mode; however, if viewed from the viewpoint e2 of which the direction forms the horizontal angle α with that of the viewpoint e1, the orientation directions of the liquid crystal molecules 24e seem to form an angle β with the transmission axes a1 and a2. For this reason, light traveling toward the viewpoint e2 has the deflection surface rotated in the liquid crystal 24 depending on the angle β, and is therefore attenuated or blocked at the deflection plate 21. The angle β is varied depending on the angles θ and α, so that the viewing angle depending on the angle θ is obtained.

Accordingly, the viewing angle of the viewing field switching panel 2 can be linearly varied depending on the angle θ formed by the orientation directions of the liquid crystal molecules 24e with the transmission axes a1 and a2. However, it should be noted that in the present embodiment, the viewing field modes are controlled by switching between the wide viewing field mode in which the electrodes 23a and 23b are brought into the same potential state and the narrow viewing field mode in which they are brought into different potential states.

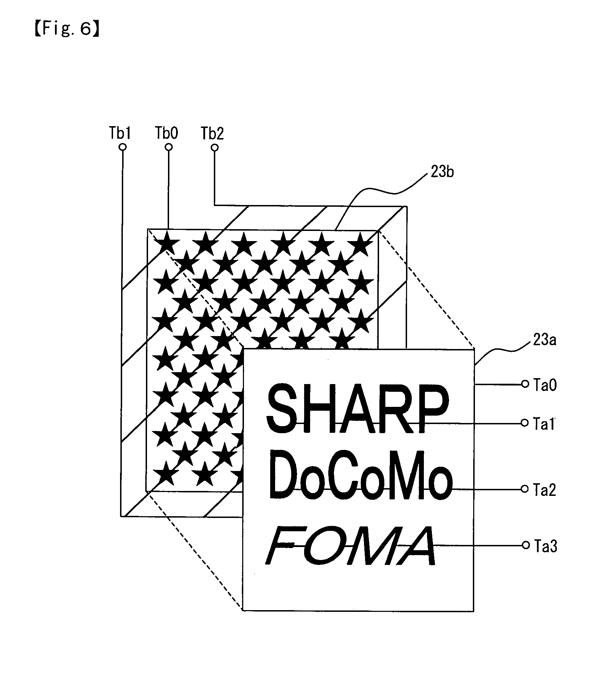

Fig. 6 is a diagram illustrating a configuration example of the electrodes 23a and 23b of the viewing field switching panel 2 illustrated in Fig. 2. Each of the electrodes 23a and 23b is divided into one or more pattern areas and a background area excluding the pattern areas, and each of the areas is configured as an independent electrode piece. The electrode piece is provided with a narrow gap (e.g., 12 µm at minimum) with a neighboring electrode piece, and thereby both of the electrode pieces are electrically insulated from each other.

The electrode 23a on the front side is formed with three types of character patterns "SHARP", "DoCoMo", and "FOMA" (any of these patterns is a trademark or registered trademark). These character patterns and the remaining background are respectively formed as independent electrode pieces, and can be controlled to different potentials. In the present embodiment, the background is connected to an electrode terminal Ta0, "SHARP" to an electrode terminal Ta1, "DoCoMo" to an electrode terminal Ta2, and "FOMA" to an electrode terminal Ta3.

Also, the electrode 23b on the rear side is formed with a pattern including a plurality of stars. This pattern is an aggregate of small star-shaped pattern pieces, and any two neighboring pattern pieces on an obliquely directed line from upper right to lower left in the display area are connected to each other, based on which a plurality of pattern lines extending in the oblique direction are formed. These pattern lines are connected to an electrode terminal Tb 1 or Tb2 such that any two neighboring pattern lines are respectively connected to the different electrode terminals. That is, a first pattern in which a plurality of pattern lines are combined in a comb shape and connected to the electrode terminal Tb1, and a second pattern in which a plurality of pattern lines are combined in a comb shape and connected to the electrode terminal Tb2 are arranged in a state where teeth of one of the combs are combined with those of the other one so as to be inserted into gaps between the teeth of the other one. The first and second patterns, and the remaining background are respectively formed as independent electrode pieces, and the background is connected to an electrode terminal Tb0.

If any of two different voltage levels (e.g., 0 V and 3 V) is applied to the above-described electrode terminals Ta0 to Ta3, and Tb0 to Tb2, an area between an opposed pair of electrode pieces having different potentials is brought into the narrow viewing angle state, and that between an opposed pair of electrode pieces having the same potential is brought into the wide viewing angle state. Accordingly, depending on a combination of the voltage levels applied to the respective electrode terminals Ta0 to Ta3, and Tb0 to Tb2, the viewing angle within the display area can be partially differentiated.

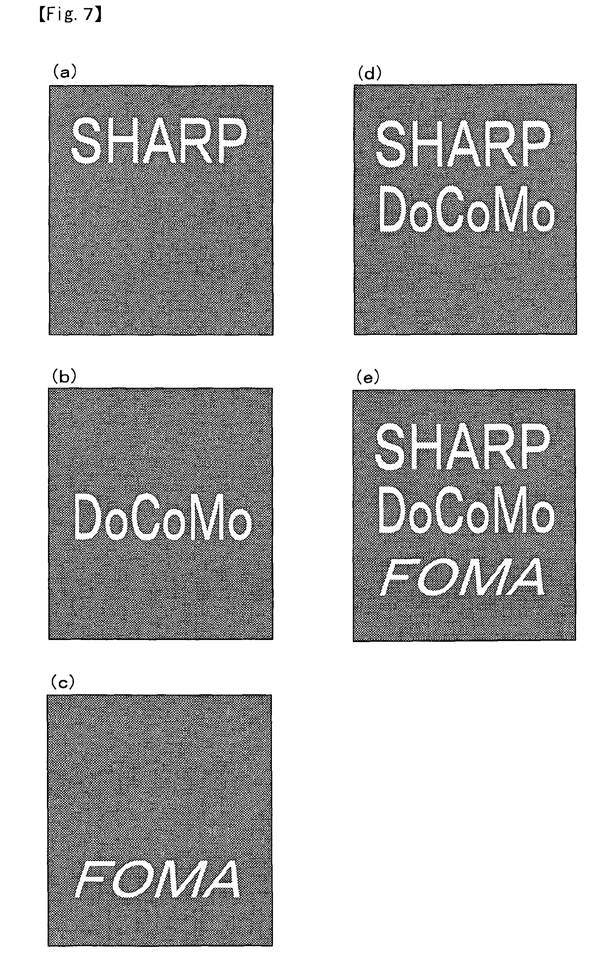

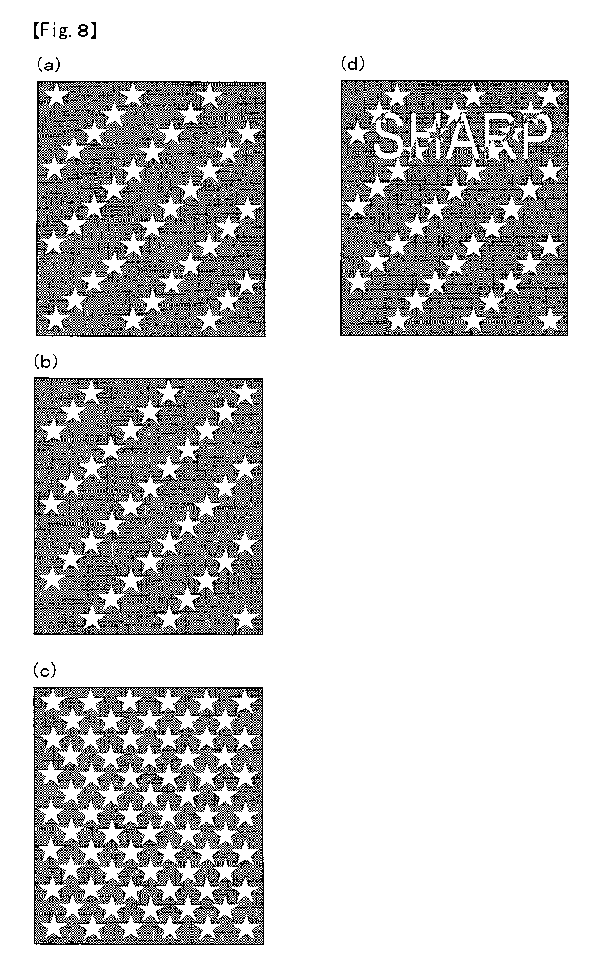

Figs. 7 and 8 are diagrams illustrating examples of the display transmitting face of the viewing field switching panel 2 in the narrow viewing field mode, in which examples of the pattern area partially brought into the wide viewing angle state in the narrow viewing field mode are illustrated.

Figs. 7 (a) to (e) illustrate examples of the pattern area, which are formed in the display area in the narrow viewing field mode with use of the character patterns of the electrode 23a on the front side based on the difference in viewing angle. In the present embodiment, any of Figs. 7 (a) to (e) is described on an assumption that the electrode terminals Tb0 to Tb2 of the electrode 23b on the rear side are applied with a high level voltage (3 V).

Fig. 7 (a) illustrates a case where the electrode terminal Ta1 is applied with the high level voltage (3V), and those Ta0, Ta2, and Ta3 with a low level voltage (0 V). In this case, the character pattern area "SHARP" connected to the electrode terminal Ta1 is not formed with an electric field, and therefore brought into the wide viewing angle state, and the remaining area is formed with an electric field, and therefore brought into the narrow viewing angle state.

Similarly, Fig. 7 (b) illustrates a case where the electrode terminal Ta2 is applied with the high level voltage, those Ta0, Ta1, and Ta3 with the low level voltage, and the character pattern area "DoCoMo" is only brought into the wide viewing angle state. Also, Fig. 7 (c) illustrates a case where the electrode terminal Ta3 is applied with a high level voltage, those Ta0 to Ta2 with a low level voltage, and the character pattern area "FOMA" is only brought into the wide viewing angle state.

Further, Fig. 7 (d) illustrates a case where the electrode terminals Ta1 and Ta2 are applied with the high level voltage, those Ta0 and Ta3 with the low level voltage, and the two character pattern areas "SHARP" and "DoCoMo" are simultaneously brought into the wide viewing angle state. Still further, Fig. 7 (e) illustrates a case where the electrode terminals Ta1 to Ta3 are applied with the high level voltage, that Ta0 with the low level voltage, and the three character pattern areas "SHARP", "DoCoMo", and "FOMA" are simultaneously brought into the wide viewing angle state.

Figs. 8 (a) to (c) illustrate examples of the pattern area, which are formed in the display area in the narrow viewing field mode with use of the graphic pattern of the electrode 23b on the rear side based on the difference in viewing angle. In the present embodiment, any of (a) to (c) is described on an assumption that the electrode terminals Ta0 to Ta3 of the electrode 23a on the front side are applied with the high level voltage.

Fig. 8 (a) illustrates a case where the electrode terminal Tb1 is applied with the high level voltage, and those Tb0 and Tb2 with the low level voltage. In this case, the first pattern area connected to the electrode terminal Tb1 is brought into the wide viewing angle state, and the remaining area into the narrow viewing angle state. Fig. 8 (b) illustrates a case where the electrode terminal Tb2 is applied with the high level voltage, those Tb0 and Tb1 with the low level voltage, and the second pattern area connected to the electrode terminal Tb2 is only brought into the wide viewing angle state. Fig. 8 (c) illustrates a case where the electrode terminals Tb1 and Tb2 are applied with the high level voltage, that Tb0 with the low level voltage, and the first and second pattern areas are simultaneously brought into the wide viewing angle state.

Fig. 8 (d) illustrates a case where the pattern areas having the wide viewing angle are formed with use of the both patterns of the electrodes 23a and 23b. That is, a case is described where the electrode terminals Ta1 and Tb2 are applied with the low level voltage, those Ta0, Ta2, Ta3, Tb0, and Tb1 with the high level voltage, and the "SHARP" and second pattern areas are simultaneously brought into the wide viewing angle state.

As described above, based on the combination of the voltage levels applied to the respective electrode pieces constituting the electrodes 23a and 23b, an area to be partially brought into the wide viewing angle state can be selected from various combinations of the patterns in the narrow viewing field mode. Note that in Fig. 8 (d), an area in which the second pattern and the character pattern "SHARP" are overlapped is not formed with an electric field, and therefore brought into the narrow viewing angle state. Accordingly, there is no chance that a local area having large width and height is generated as a result of the combination of the pattern area formed by the electrode piece 23a on the front side and that formed by the electrode piece 23b on the rear side. Also, as illustrated in Figs. 6 to 8, each of the pattern areas is formed so as to be smaller in dimensions than the background area.

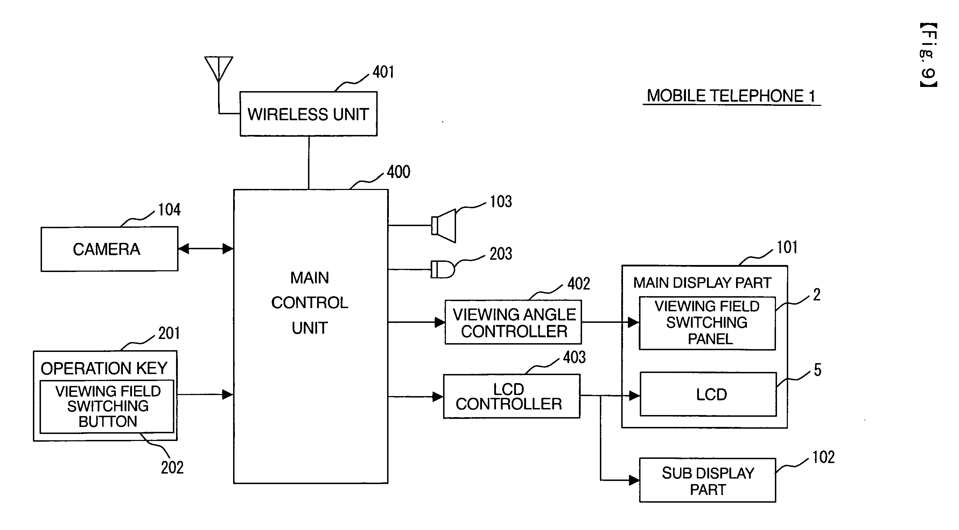

Fig. 9 is a block diagram illustrating an example of an internal configuration of the mobile telephone 1 illustrated in Fig. 1. A main control unit 400 is a processor for controlling main operations of the mobile telephone 1. In the present embodiment, the main control unit 400 controls the telephone receiver 103, a camera 104, operation keys 201, a telephone microphone 203, a wireless unit 401, a viewing angle controller 402, and an LCD controller 403.

The wireless unit 401 transmits/receives electromagnetic waves to/from an unshown base station to exchange call sound or electronic mails. The LCD controller 403 supplies drive signals to the main display part 101 and the sub display part 102. The viewing angle controller 402 supplies a drive signal to the viewing field switching panel 2 to perform the switching control of the viewing angle, and constitutes a viewing field switching device along with the viewing field switching panel 2.

The main control unit 400 outputs a control signal to the viewing angle controller 402 when the viewing field switching button 202 is operated, or when any of the other operation keys 201 is operated to thereby change a setting of the viewing angle control. The viewing angle controller 402 generates voltage signals applied to the respective electrode terminals Ta0 to Ta3, and Tb0 to Tb2 of the viewing field switching panel 2, based on the control signal.

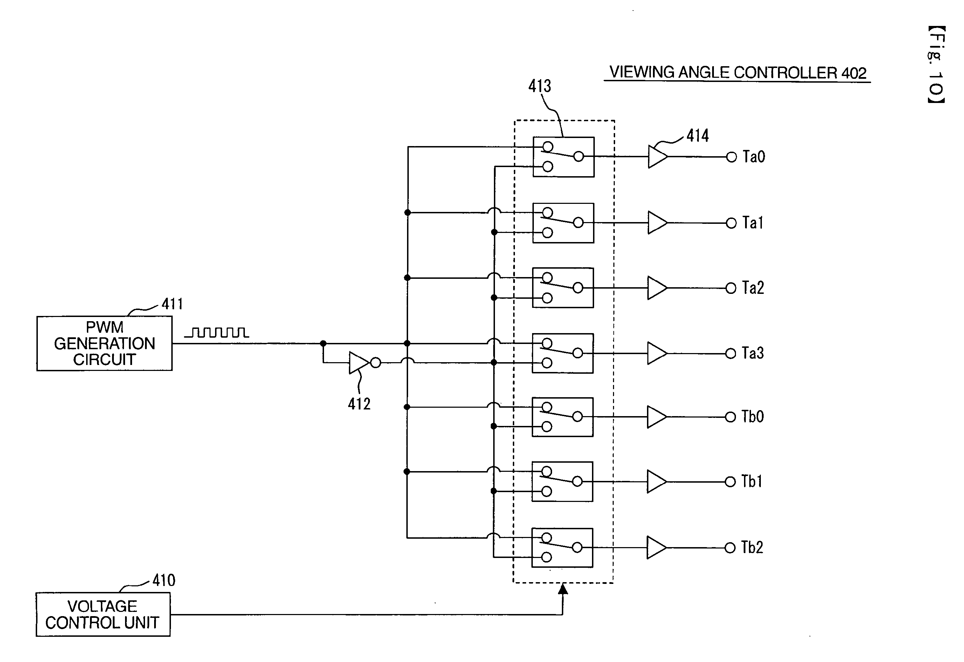

Fig. 10 is a block diagram illustrating a configuration example of the viewing angle controller 402 illustrated in Fig. 9. The viewing angle controller 402 substantially includes a voltage control unit 410, PWM generation circuit 411, inverter 412, seven switching elements 413, and seven amplifiers 414.

The PWM generation circuit 411 generates a pulse signal for AC driving of the viewing field switching panel 2. For example, a pulse signal having a frequency of 70 Hz is generated. The inverter 412 generates an inverted signal into which the pulse signal (non-inverted signal) is inverted. The seven switching elements 413 select and output either the non-inverted or inverted signal. The output signal from each of the switching elements 413 is amplified to a predetermined voltage level by a corresponding one of the amplifiers 414, and then output to a corresponding one of the electrode terminals Ta1 to Ta4, and Tb1 to Tb2

The voltage control unit 410 controls the seven switching elements 413 to switch between the wide and narrow viewing field modes or between the wide viewing angle patterns in the narrow viewing field mode, based on an instruction of the main control unit 400.

In the case of the AC driving of the viewing field switching panel 2, if the opposed electrodes 23a and 23b are applied with pulse signals having the same phase, the viewing field switching panel 2 is brought into the wide viewing angle state, whereas if they are applied with pulse signals having reverse phases, it is brought into the narrow viewing angle state. For this reason, in the wide viewing field mode, the voltage control unit 410 controls the switching elements 413 so as to supply pulse signals having the same phase (e.g., non-inverted signals) to all of the electrode terminals Ta1 to Ta3, and Tb1 to Tb2. Also, to display the character pattern "SHARP" having the wide viewing angle in the narrow viewing field mode, it is only necessary to control the switching elements 413 so as to supply the non-inverted signals to the electrode terminals Ta0, Ta2, and Ta3, and the inverted signals to the remaining electrode terminals Ta1, and Tb0 to Tb2,

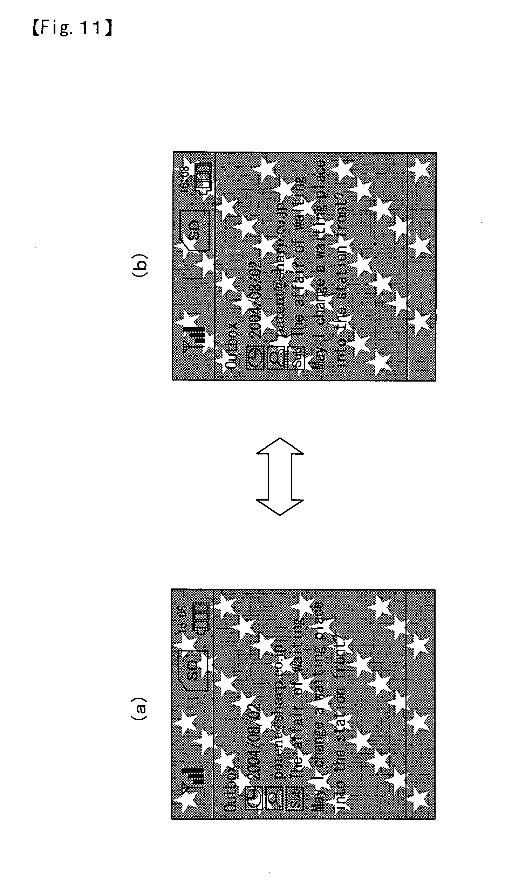

Fig. 11 is a diagram illustrating an example for a case where the pattern areas having the wide viewing angle are dynamically switched in the narrow viewing field mode. Both of Figs. 11 (a) and (b) illustrate appearances of the main display part 101 in the narrow viewing field mode as viewed from a horizontally oblique direction; however, the pattern area brought into the wide viewing angle state is different between Figs. 11 (a) and (b). By dynamically switching between the wide viewing angle patterns illustrated in Figs. 11 (a) and (b) in the narrow viewing field mode, a moving pattern is visible by people peeping at from the oblique direction.

Such dynamic switching between the patterns is performed by the voltage control unit 410 illustrated in Fig. 10, in which the wide viewing angle patterns illustrated in Figs. 11 (a) and (b) are alternately switched every time a predetermined time period elapses. For example, the patterns are switched every one to two seconds. In general, the human vision is characterized by being attracted to a moving pattern, so that if the high contrast moving pattern is overlapped on the low contrast display area, the conscious of a peeper can be strongly attracted to the pattern, and therefore the low contrast screen display can be further prevented from being easily recognized or made out.

In addition, the dynamic switching of the wide viewing angle pattern may not be necessarily performed at regular intervals; however, it should be switched at a timing enough for human eyes to recognize the pattern as being dynamic, and if the switching timing is too early, a sufficient effect cannot be obtained. In the case of the AC driving, the wide viewing angle pattern should be switched at intervals at least longer than a cycle of the AC driving, and is preferably switched at intervals, for example, equal to or longer than 1 / 10 seconds.

Note that in the present embodiment, the case where the two pattern areas are switched is described as an example; however, it is more effective if three or more pattern areas different from one another are sequentially switched. Also, it is further effective if three or more wide viewing angle patterns different from one another are switched while the switching sequence is varied.

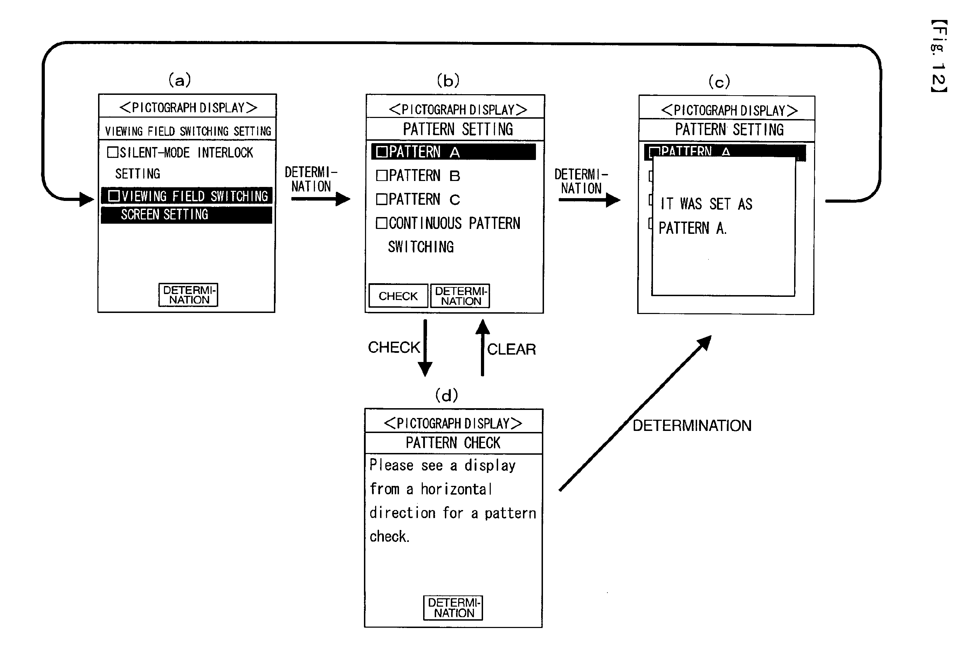

Fig. 12 is a diagram illustrating an example of a procedure for a user to set the viewing angle control, in which how a setting screen displayed on the main display part 101 moves to another one is illustrated. Fig. 12 (a) illustrates a viewing field switching setting screen for the user to set the viewing field switching. On the viewing field switching setting screen, the user can select a silent mode interlock setting or pattern setting. The silent mode interlock setting is an option for setting to interlock the narrow viewing field mode with a silent mode, and the pattern setting is an option for changing the wide viewing angle pattern in the narrow viewing field mode. If the user selects the pattern setting and then operates an enter key on the viewing field switching setting screen, the screen moves to a pattern setting screen illustrated in Fig. 12 (b).

The user can select any pattern from a plurality of prepared patterns on the pattern setting screen. Options "Pattern A", "Pattern B", and "Pattern C" are intended for fixed pattern settings without the dynamic switching, and an option "Continuous pattern switching" is intended for a setting for dynamically switching between two or more patterns. By selecting any of the options and operating the enter key, a message indicating that a pattern setting has been complete, as illustrated in Fig. 12 (c), is popped up, and then the screen returns to the viewing field switching setting screen illustrated in Fig. 12 (a).

On the other hand, if the user operates a check key while the pattern setting screen illustrated in (b) is displayed, a pattern checking screen illustrated in (d) including a message prompting to check a pattern is displayed. While the pattern checking screen is displayed, the screen is in the narrow viewing angle mode, and therefore the user can check a selected wide viewing angle pattern. Also, by operating the check key or a clear key while the pattern checking screen is displayed, the screen moves to the screen illustrated in (c), or returns to the pattern setting screen illustrated in (b).

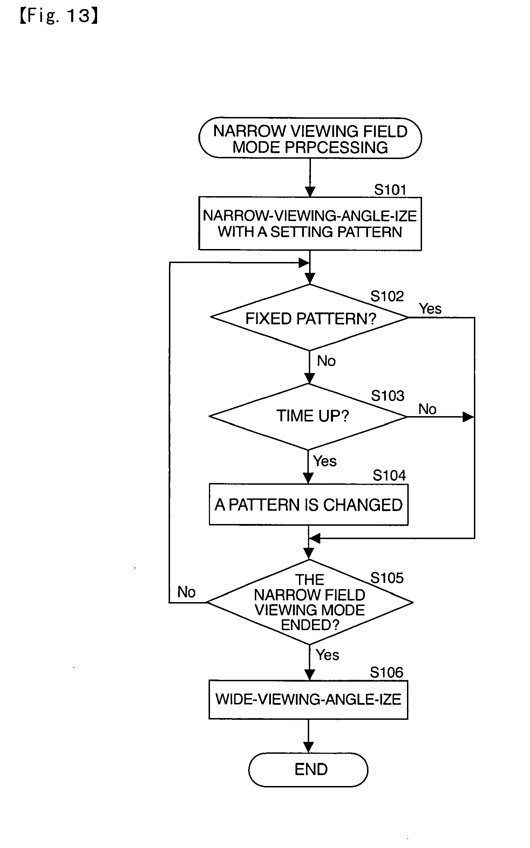

Steps S101 to S106 in Fig. 13 represent a flowchart illustrating an example of narrow viewing field mode processing. The narrow viewing field mode processing represents an operating procedure for the viewing angle controller 402 in the narrow viewing field mode, and is started if the user operates the viewing field switching button 202 in the wide viewing field mode.

First, the viewing angle of the display area is narrowed based on a user setting on the pattern setting screen illustrated in Fig. 12 (step S101). In the wide viewing field mode, the entire display area is in the wide viewing angle state, so that the viewing angle of the display area is narrowed except a pattern area specified by the user. In addition, if the "Continuous pattern switching" is selected on the pattern setting screen, dynamically switchable arbitrary patterns are used, and a timer is started.

If the user selects not any of the fixed patterns but the "Continuous pattern switching", and the above timer has been time up because a predetermined time period has elapsed, the pattern area is switched to another one (steps S102 to S104). At this time, the above timer is restarted.

The above steps S102 to S104 are repeated until the narrow viewing field mode is terminated (step S105). To move to the wide viewing field mode after the user operates the viewing field switching button 202 to terminate the narrow viewing field mode, the entire display area is brought into the wide viewing angle state, and the narrow viewing field mode processing is terminated (step S106).

Note that in the present embodiment, the mobile telephone is described as an example; however, the scope of the present invention is not limited to the mobile telephone. In general, the portable information terminal device such as the mobile telephone is preferred for the present invention because it is often used out of doors where the device is likely to be peeped by other people around; however, the scope of the present invention is not limited to such a portable terminal device. That is, any terminal device required to prevent the other people around from peeping at can be applied with the present invention, regardless of whether the terminal device is portable or stationary. For example, a financial terminal device such as an automatic teller machine for depositing cash and withdrawing cash, and for lending out money and repaying which displays personal information in an environment where there are other people around, can also be applied with the present invention.

### BRIEF DESCRIPTION OF THE DRAWINGS

[Fig. 1] Fig. 1 is an external view illustrating an example of a portable information terminal device according to an embodiment of the present invention, in which a mobile telephone 1 is illustrated as the example of the portable information terminal device.
[Fig. 2] Fig. 2 is an explanatory diagram illustrating an example of how an image on the main display part 101 can be viewed in the narrow viewing field mode, (a) illustrates an image viewed from a viewpoint within the viewing angle, and (b) an image viewed from a viewpoint outside the viewing angle.
[Fig. 3] Fig. 3 is a cross-sectional view illustrating a configuration example of the main display part 101, in which a cross section along the line A-A in Fig. 1 is illustrated.
[Fig. 4] Fig. 4 is a schematic diagram for describing a principle of the viewing angle control, in which a case of a wide viewing field mode is illustrated.
[Fig. 5] Fig. 5 is a schematic diagram for describing the principle of the viewing angle control, in which a case of a narrow viewing field mode is illustrated.
[Fig. 6] Fig. 6 is a diagram illustrating a configuration example of the electrodes 23a and 23b of the viewing field switching panel 2 illustrated in Fig. 2.
[Fig. 7] Fig. 7 is a diagram illustrating examples of a display transmitting face of the viewing field switching panel 2 in the narrow viewing field mode.
[Fig. 8] Fig. 8 is a diagram illustrating other examples of the display transmitting face of the viewing field switching panel 2 in the narrow viewing field mode.
[Fig. 9] Fig. 9 is a block diagram illustrating an example of an internal configuration of the mobile telephone 1 illustrated in Fig. 1.
[Fig. 10] Fig. 10 is a block diagram illustrating a configuration example of the viewing angle controller 402 illustrated in Fig. 9.
[Fig. 11] Fig. 11 is a diagram illustrating an example for a case where wide viewing angle patterns are dynamically switched in the narrow viewing field mode.
[Fig. 12] Fig. 12 is a diagram illustrating an example of a procedure for a user to set the viewing angle control, in which how a setting screen moves to another one is illustrated.
[Fig. 13] Fig. 13 is a flowchart illustrating an example of narrow viewing field mode processing.

### DESCRIPTION OF REFERENCE SYMBOLS

- 1:: Portable information terminal device (mobile telephone)
- 2:: Viewing field switching panel
- 3:: Liquid crystal panel for display
- 4:: Backlight
- 5:: Liquid crystal display module
- 21, 31a, 31b:: Deflection plate
- 22a, 22b, 32a, 32b:: Insulating transparent substrate
- 23a, 23b, 33a, 33b:: Transparent electrode
- 24, 34:: Liquid crystal
- 101:: Main display part
- 102:: Sub display part
- 201:: Operation key
- 202:: Viewing field switching button
- 400:: Main control unit
- 402:: Viewing angle controller
- 403:: LCD controller
- 410:: Voltage control unit
- 411:: PWM generation circuit
- 412:: Inverter
- 413:: Switching element
- 414:: Amplifier
- a1, a2:: Transmission axis
- e1, e2:: Viewpoint
- Ta0 to Ta4:: Electrode terminal on front side
- Tb0 to Tb2:: Electrode terminal on rear side

## Claims

1. A portable information terminal device comprising a display device capable of switching between a wide viewing field mode in which a display area is made to be browsed in a wide viewing angle state and a narrow viewing field mode in which said display area is made to be browsed in a narrow viewing angle state, wherein
a pattern area is formed in the display area of said display device; in the wide viewing field mode, the whole of the display area is brought into the wide viewing angle state; and in the narrow viewing field mode, the display area except said pattern area is brought into the narrow viewing angle state.

2. The portable information terminal device according to claim 1, wherein
a first pattern area and a second pattern area are formed in said display area; in the wide viewing field mode, the whole of the display area is brought into the wide viewing angle state; and in the narrow viewing field mode, a first divided state in which the display area except the first pattern area is brought into the narrow viewing angle state, and a second divided state in which the display area except the second pattern area is brought into the narrow viewing angle state are dynamically switched.

3. A portable information terminal device comprising: a display device for displaying information in a display area on a display screen; and a viewing field switching device for switching a viewing angle of said display screen, wherein:
said viewing field switching device comprises: a viewing field switching panel that is arranged on said display screen and formed with a display transmitting face having a predetermined pattern area in said display area;
viewing angle controlling means of controlling a viewing angle of a background area that is the display area except said pattern area; and
mode switching means of switching between a wide viewing field mode in which said display area is made to be browsed in a wide viewing angle state and a narrow viewing field mode in which said display area is made to be browsed in a narrow viewing angle state; and
said portable information terminal device makes a viewing angle of said pattern area and that of said background area coincide with each other in the wide viewing field mode, and differentiates the viewing angles of said pattern area and said background area from each other in the narrow viewing field mode.

4. The portable information terminal device according to claim 3, wherein
said viewing angle controlling means can independently control the viewing angles of said pattern area and said background area.

5. The portable information terminal device according to claim 4, wherein:
said viewing field switching panel comprises:
two insulating transparent substrates arranged so as to face to each other; a liquid crystal encapsulated between these insulating transparent substrates; and two sheets of transparent electrodes respectively formed on inner faces of said insulating transparent substrates,
at least one of said transparent electrodes is divided into an electrode piece formed in said pattern area and that formed in said background area; and
said viewing angle controlling means makes potentials of said electrode pieces coincide with each other in the wide viewing field mode, and differentiates the potentials of said electrode pieces from each other in the narrow viewing field mode.

6. The portable information terminal device according to claim 3, wherein:
said display area is in a rectangular shape; and
said pattern area is in a shape extending in an oblique direction with respect to said display area.

7. A portable information terminal device comprising: a display device for displaying information in a display area on a display screen; and a viewing field switching device for switching a viewing angle of said display screen, wherein:
said viewing field switching device comprises:
a viewing field switching panel that is arranged on said display screen and formed with a display transmitting face having a first pattern area and a second pattern area in said display area;
viewing angle controlling means of controlling viewing angles of the first pattern area, the second pattern area, and a background area that is the display area except these pattern areas; and
mode switching means of switching between a wide viewing field mode in which said display area is made to be browsed in a wide viewing angle state and a narrow viewing field mode in which said display area is made to be browsed in a narrow viewing angle state; and
said portable information terminal device makes the viewing angles of the first pattern area, the second pattern area, and the background area coincide with one another in the wide viewing field mode, and in the narrow viewing field mode, dynamically switches between a first divided state in which the viewing angle of the first pattern area is differentiated from those of the remaining areas and a second divided state in which the viewing angle of the second pattern area is differentiated from those of the remaining areas.

8. The portable information terminal device according to claim 7, wherein
said viewing angle controlling means switches between said first divided state and said second divided state at predetermined time intervals.

9. The portable information terminal device according to claim 7, wherein:
said viewing field switching panel comprises: two insulating transparent substrates arranged so as to face to each other; a liquid crystal encapsulated between these insulating transparent substrates; and two sheets of transparent electrodes respectively formed on inner faces of said insulating transparent substrates;
the first pattern area, the second pattern area, and the background area are formed by dividing at least one of said transparent electrodes into two or more electrode pieces; and
said viewing angle controlling means makes potentials of said electrode pieces coincide with each other in the wide viewing field mode, and differentiates the potentials of said electrode pieces from each other in the narrow viewing field mode.

10. A display terminal device comprising a display device capable of switching between a wide viewing field mode in which a display area is made to be browsed in a wide viewing angle state and a narrow viewing field mode in which said display area is made to be browsed in a narrow viewing angle state, wherein
a pattern area is formed in the display area of said display device; in the wide viewing field mode, the whole of the display area is brought into the wide viewing angle state; and in the narrow viewing field mode, the display area except said pattern area is brought into the narrow viewing angle state.

11. The display terminal device according to claim 10, wherein:
a first pattern area and a second pattern area are formed in said display area; and
in the wide viewing field mode, the whole of the display area is brought into the wide viewing angle state; and in the narrow viewing field mode, a first divided state in which the display area except the first pattern area is brought into the narrow viewing angle state, and a second divided state in which the display area except the second pattern area is brought into the narrow viewing angle state are dynamically switched.
